# EUROPEAN PATENT APPLICATION

(11) **EP 2 878 987 A1**
(43) Date of publication of application: **03.06.2015**
(21) Application number: 14190256.9
(22) Date of filing: 24.10.2014
(51) Int. Cl.: G02B 21/36, G06F 3/048

(54) **Microscope-image display control method, microscope-image display control program, and microscope-image display device**

(30) Priority: 12.11.2013 JP 2013234149
(71) Applicant: Olympus Corporation, Tokyo 151-0072 (JP)
(72) Inventor: Kobayashi, Mina, Tokyo, 151-0072 (JP); Ikeno, Yasunori, Tokyo, 151-0072 (JP); Ueda, Ryosuke, Tokyo, 151-0072 (JP); Ishihara, Katashi, Tokyo, 151-0072 (JP); Tanaka, Toshihiko, Tokyo, 151-0072 (JP)
(74) Representative: Gunzelmann, Rainer

(57) **Abstract**

A microscope image desired for observation is specified in a shorter time while playing back microscope images. Provided is a microscope-image display control method including a displaying step (S3) of displaying, of a plurality of microscope images acquired by moving a focal position of an objective optical system of a microscope in an optical-axis direction, one of the microscope images on a display screen; a top-bottom instructing step (S4) of giving an instruction for one of top and bottom directions on the display screen; and Z-direction image switching steps (S8 and S10) of switching the microscope image displayed on the display screen to another microscope image acquired at a focal position of the objective optical system, which is adjacent to the displayed microscope image in the optical-axis direction, based on the direction instructed in the top-bottom instructing step (S4).

## Description

### {Technical Field}

The present invention relates to a microscope-image display control method, a microscope-image display control program, and a microscope-image display device.

### {Background Art}

In the related art, time-lapse observation has been performed, in which images of a specimen are acquired over a long period of time by using a microscope, and it is possible to observe, ex post facto, the state of the specimen while following the passage of time by acquiring the images in association with the time of image acquisition. Also, there is a known system with which images that are acquired in association with time during such time-lapse observation are sequentially displayed (played back) in a time-axis direction (for example, see Patent Literature 1).

In this system, a means of inputting identification information when recording images is provided, high-speed playback is performed until the identification information is detected during playback of the images, and the playback speed is reduced when the identification information is detected.

### {Citation List}

### {Patent Literature}

{PTL 1} Japanese Unexamined Patent Application, Publication No. Hei 11-75147

### {Summary of Invention}

### {Technical Problem}

However, with the system in Patent Literature 1, an operator needs to input the identification information, which indicates images of interest, while recording images. Because of this, the operator needs to continuously monitor which images are images of interest during time-lapse observation over a long period of time, and there is a problem in that a large amount of effort is required.

In contrast, with a method in which a microscope image to be observed is searched for while playing back microscope images, because fast-forward playback and reverse playback of the microscope images are possible, the microscope image to be observed can be specified with sufficiently less time as compared with real time processing.

However, the number of microscope images acquired during time-lapse observation is generally enormous, and, with microscope images in particular, there are cases in which a plurality of images are acquired not only in the time-axis direction but also while changing the depth at which a specimen is observed. Therefore, there is a problem in that, if only fast-forward playback and reverse playback in the time-axis direction are allowed, it will take time to specify a microscope image to be observed during a playback.

The present invention has been conceived in light of the above-described circumstances, and an object thereof is to provide a microscope-image display control method, a microscope-image display control program, and a microscope-image display device with which it is possible to specify a microscope image to be observed in a shorter time while playing back microscope images.

### {Solution to Problem}

In order to achieve the above-described object, the present invention provides the following solutions.

A first aspect of the present invention is a microscope-image display control method including a displaying step of displaying, of a plurality of microscope images acquired by moving a focal position of an objective optical system of a microscope in an optical-axis direction, one of the microscope images on a display screen; a top-bottom instructing step of giving an instruction for one of top and bottom directions on the display screen; and a Z-direction image switching step of switching the microscope image displayed on the display screen to another microscope image acquired at a focal position of the objective optical system, which is adjacent to the displayed microscope image in the optical-axis direction, based on the direction instructed in the top-bottom instructing step.

With this aspect, in the case in which the instruction for one of the top and bottom directions is given on the display screen in the top-bottom instructing step in the state in which one of the microscope images is displayed on the display screen in the displaying step, the displayed microscope image is switched to the next microscope image in the Z-direction image switching step. In this case, the microscope image to be switched to next is a microscope image acquired at a focal position of the objective optical system of the microscope that is adjacent to the displayed microscope image in the optical-axis direction, and thus, it is possible to change the depthwise position of a specimen to be observed.

The depth direction in the specimen can easily be associated with the top-bottom direction on the display screen, and thus, it is easy to make an intuitive association between instructions for the top-bottom direction and changes in the depth direction. For example, it is natural that a downward instruction means a change to a deeper position in the specimen and that an upward instruction means a change in a shallower direction in the specimen. Alternatively, conversely, it is also easy to understand that a downward instruction means to decrease the depth (more shallow) and an upward instruction means to increase the depth (more deep).

Therefore, in all cases, when an operator wants to change the depthwise position of a specimen to be observed, he/she can intuitively perform an operation for giving instructions for the top-bottom direction. As a result, it is possible to quickly find a microscope image at a depthwise position at which observation is desired, and thus, the observation time can be reduced.

In the above-described first aspect, in the Z-direction image switching step, the displayed microscope image may be switched to another microscope image to be displayed next by scrolling the image on the screen in a top-bottom direction.

By doing so, when an instruction for a top-bottom direction on the display screen is given in the top-bottom instructing step, the microscope image displayed on the display screen is scrolled in the top-bottom direction, thus being switched to the next microscope image.

The displayed microscope image and the next microscope image are microscope images that are acquired at focal positions of the objective optical system of the microscope, which are adjacent to each other in the optical-axis direction, and, by scrolling the images in the top-bottom direction, the operator can visually check the process of switching to the microscope image for a position adjacent in the depth direction in the specimen. Therefore, it is possible to prevent the operator from giving an instruction for the wrong direction, which makes it possible to even more easily find a microscope image at a depthwise position at which observation is desired and to reduce the observation time.

The above-described first aspect may include a left-right instructing step of giving an instruction for one of left and right directions on the display screen; and a display-image switching step of changing the state of the microscope image displayed on the display screen to a different display state based on the direction instructed in the left-right instructing step.

By doing so, in the case in which the instruction for one of the left and right directions is given on the display screen in the left-right instructing step in the state in which one of the microscope images is displayed on the display screen in the displaying step, the state of the displayed microscope image is changed to a different display state.

The above-described first aspect, in which a plurality of microscope images are acquired in a time series at individual focal positions in the optical-axis direction, may include a left-right instructing step of giving an instruction for one of left and right directions on the display screen; and a time-axis-direction image switching step of switching the microscope image displayed on the display screen to another microscope image acquired at a time that is adjacent to that of the displayed microscope image in a time-series direction, based on the direction instructed in the left-right instructing step.

By doing so, in the case in which the instruction for one of the left and right directions is given on the display screen in the left-right instructing step in the state in which one of the microscope images is displayed on the display screen in the displaying step, the displayed microscope image is switched to the next microscope image in the time-axis direction image switching step. In this case, the microscope image to be switched to next is a microscope image acquired at a time that is adjacent to that of the displayed microscope image in the time-series direction, and it is possible to change the acquisition time of the microscope image to be observed.

The time-series direction can easily be associated with the left-right direction on the display screen, and thus, it is easy to make an intuitive association between instructions for the left-right direction and changes in the time-series direction. It is natural that a rightward instruction means a change to a later acquisition time and that a leftward instruction means a change to an earlier acquisition time. Therefore, when the operator wants to change the acquisition time of the microscope image to be observed, he/she can intuitively perform an operation for giving instructions for the left-right direction.

Specifically, with the instructions for the top-bottom direction and the instructions for the left-right direction, the operator can quickly find a microscope image desired for observation by intuitively changing the depthwise position of and the acquisition time for the specimen, at which observation is desired, and thus, the observation time can be reduced.

In the above-described first aspect, in the time-axis-direction image switching step, the displayed microscope image may be switched to another microscope image to be displayed next by scrolling the image on the screen in a left-right direction.

By doing so, when an instruction for a left-right direction is given on the display screen in the left-right instructing step, the microscope image displayed on the display screen is scrolled in the left-right direction, thus being switched to the next microscope image.

The displayed microscope image and the next microscope image are microscope images that are acquired at times that are adjacent to each other in the time-series direction, and, by scrolling the images in the left-right direction, the operator can visually check the process in which the microscope images are switched in the time-series direction. Therefore, it is possible to prevent the operator from giving an instruction for the wrong direction, which makes it possible to even more easily find a microscope image at a depthwise position and acquisition time, at which observation is desired, and to reduce the observation time.

A second aspect of the present invention is a microscope-image display control program that causes a computer to execute a displaying step of displaying, of a plurality of microscope images acquired by moving a focal position of an objective optical system of a microscope in an optical-axis direction, one of the microscope images on a display screen; a top-bottom instructing step of giving an instruction for one of top and bottom directions on the display screen; and a Z-direction image switching step of switching the microscope image displayed on the display screen to another microscope image acquired at a focal position of the objective optical system, which is adjacent to the displayed microscope image in the optical-axis direction, based on the direction instructed in the top-bottom instructing step.

A third aspect of the present invention is a microscope-image display device including a display screen that displays a microscope image; a top-bottom instructing means for giving an instruction for one of top and bottom directions on the display screen; and a control portion that causes, of a plurality of microscope images acquired by moving a focal position of an objective optical system of a microscope in an optical-axis direction, one of the microscope images to be displayed on the display screen and that controls the display on the display screen so that a microscope image displayed on the display screen is switched to another microscope image acquired at a focal position of the objective optical system, which is adjacent to the displayed microscope image in the optical-axis direction, when an instruction for one of the top and bottom directions is given by the top-bottom instructing means.

With this aspect, when the operator gives an instruction for one of the top and bottom directions on the display screen by means of the top-bottom instructing means in the state in which one of the microscope images is displayed on the display screen, the control portion causes the microscope image displayed on the display screen to be switched to another microscope image acquired at a focal position of the objective optical system, which is adjacent to the displayed microscope image in the optical-axis direction. Therefore, when the operator wants to change the depthwise position of the specimen to be observed, he/she can quickly find a microscope image at the depthwise position at which observation is desired by intuitively performing an operation for giving instructions for the top-bottom direction, and thus, the observation time can be reduced.

In the above-described third aspect, the control portion may control the display on the display screen so that the displayed microscope image is switched to another microscope image to be displayed next by scrolling the image on the screen in a top-bottom direction in accordance with the instruction given by the top-bottom instructing means.

By doing so, when an instruction for a top-bottom direction on the display screen is given by the top-bottom instructing means, the control portion causes the microscope image displayed on the display screen to be scrolled in the top-bottom direction, thus being switched with the next microscope image. By scrolling the images in the top-bottom direction, the operator can visually check the process of switching to the microscope image at an adjacent position in the depth direction in the specimen. Therefore, it is possible to prevent the operator from giving an instruction for the wrong direction, which makes it possible to even more easily find a microscope image at a depthwise position, at which observation is desired, and to reduce the observation time.

The above-described third aspect may include a left-right instructing means for giving an instruction for one of left and right directions on the display screen, wherein the control portion controls the display on the display screen so that a state of the microscope image displayed on the display screen is changed to a different display state when the instruction for one of the left and right directions is given by the left-right instructing means.

By doing so, when the operator gives an instruction for one of the left and right directions on the display screen by means of the left-right instructing means in the state in which one of the microscope images is displayed on the display screen, the control portion causes the state of the microscope image displayed on the display screen to be changed to a different display state.

The above-described third aspect may include a left-right instructing means for giving an instruction for one of left and right directions on the display screen, wherein the control portion controls the display on the display screen so that the microscope image displayed on the display screen is switched to another microscope image acquired at a time that is adjacent to the displayed microscope image in a time-series direction when the instruction for one of the left and right directions is given by the left-right instructing means.

By doing so, when the operator gives an instruction for one of the left and right directions on the display screen by means of the left-right instructing means in the state in which one of the microscope images is displayed on the display screen, the control portion causes the microscope image displayed on the display screen to be switched to another microscope image acquired at a time that is adjacent to that of the displayed microscope image in the time-series direction. Therefore, when the operator wants to change the acquisition time of the microscope image to be observed, he/she can quickly find a microscope image at a depthwise position and acquisition time, at which observation is desired, by intuitively performing an operation for giving instructions for the left-right direction, and thus, the observation time can be reduced.

In the above-described third aspect, the control portion may control the display on the display screen so that the displayed microscope image is switched to another microscope image to be displayed next by scrolling the image on the screen in the left-right direction in accordance with the instruction given by the left-right instructing means.

By doing so, the control portion causes the microscope image displayed on the display screen to be scrolled in the left-right direction, thus being switched to the next microscope image.

The displayed microscope image and the next microscope image are microscope images that are acquired at times that are adjacent to each other in the time-series direction, and, by scrolling the images in the left-right direction, the operator can visually check the process in which the microscope images are switched in the time-series direction. Therefore, it is possible to prevent the operator from giving an instruction for the wrong direction, which makes it possible to even more easily find a microscope image at a depthwise position and acquisition time, at which observation is desired, and to reduce the observation time.

In the above-described third aspect, the control portion may control the display on the display screen so that the displayed microscope image is switched to another microscope image to be displayed next by scrolling on the screen in the top-bottom direction and the left-right direction at the same time when the instructions are given by the top-bottom instructing means and the left-right instructing means at the same time.

By doing so, when instructions are given at the same time using the top-bottom instructing means and the left-right instructing means, the control portion can cause the displayed microscope image to be switched to another microscope image that differs therefrom in terms of both the depth in the specimen and the acquisition time by scrolling the screen in the top-bottom direction and the left-right direction at the same time. Accordingly, it is possible to even more easily find a microscope image desired for observation and to reduce the observation time as compared with the case in which the depth position and the acquisition time are changed separately.

### {Advantageous Effects of Invention}

The present invention affords an advantage in that it is possible to specify a microscope image to be observed in a shorter time while playing back microscope images.

### {Brief Description of Drawings}

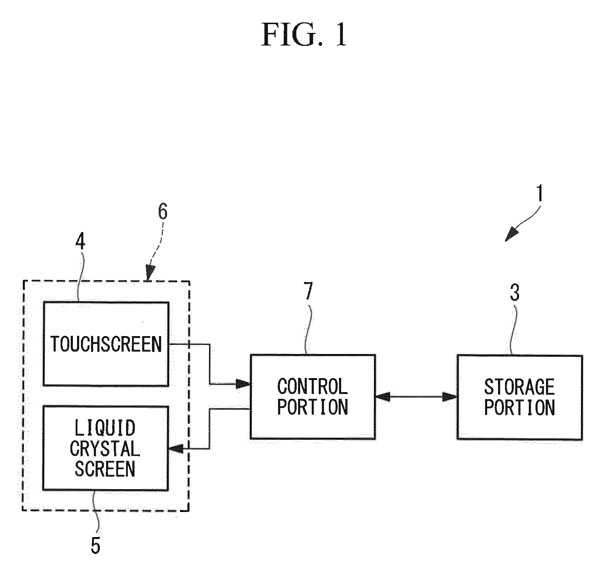

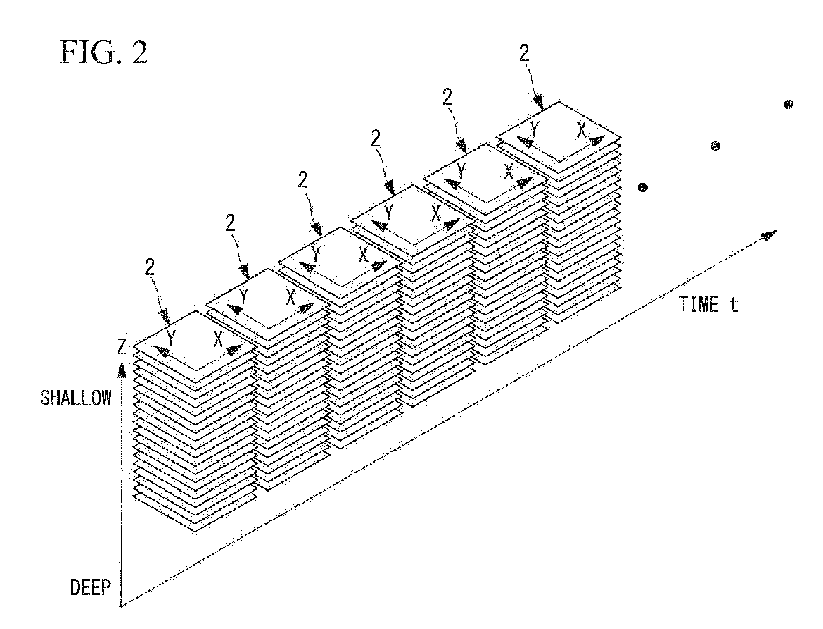

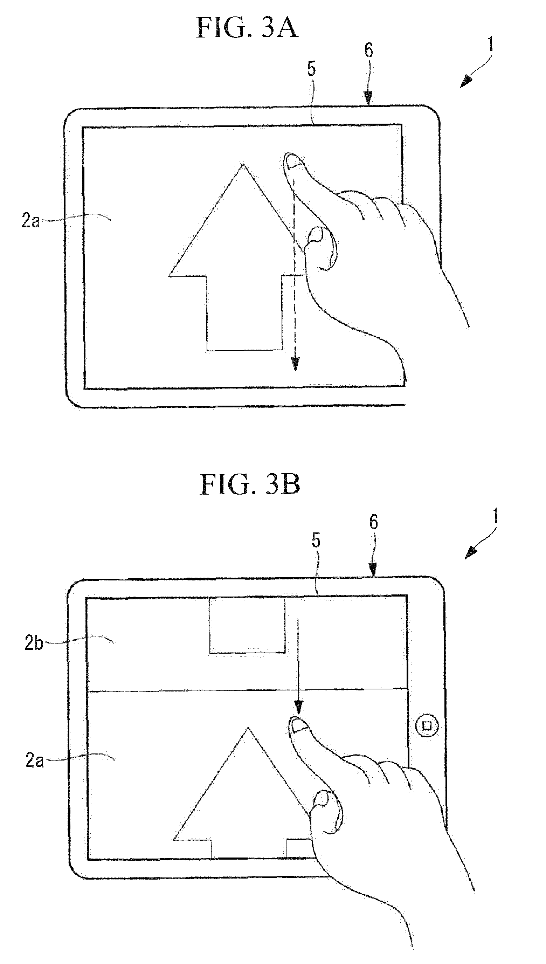

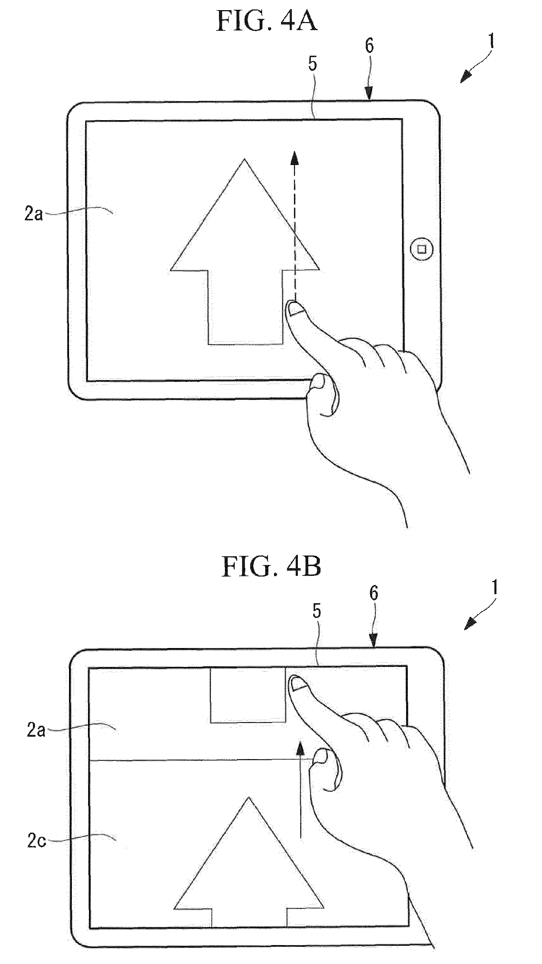

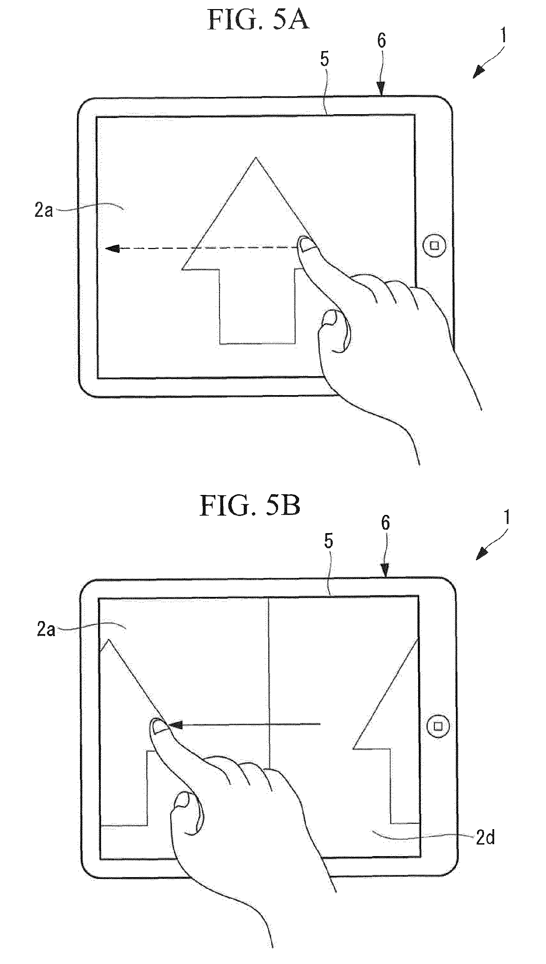

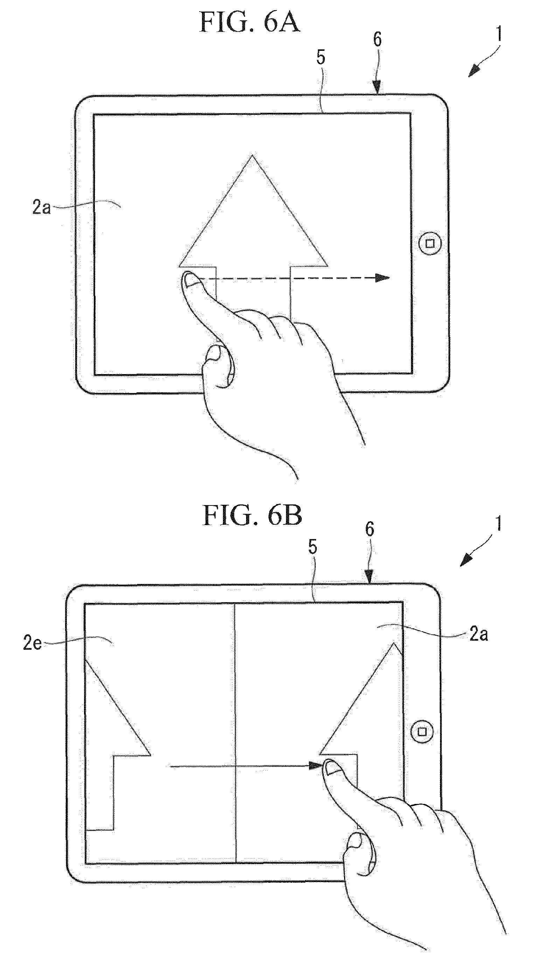

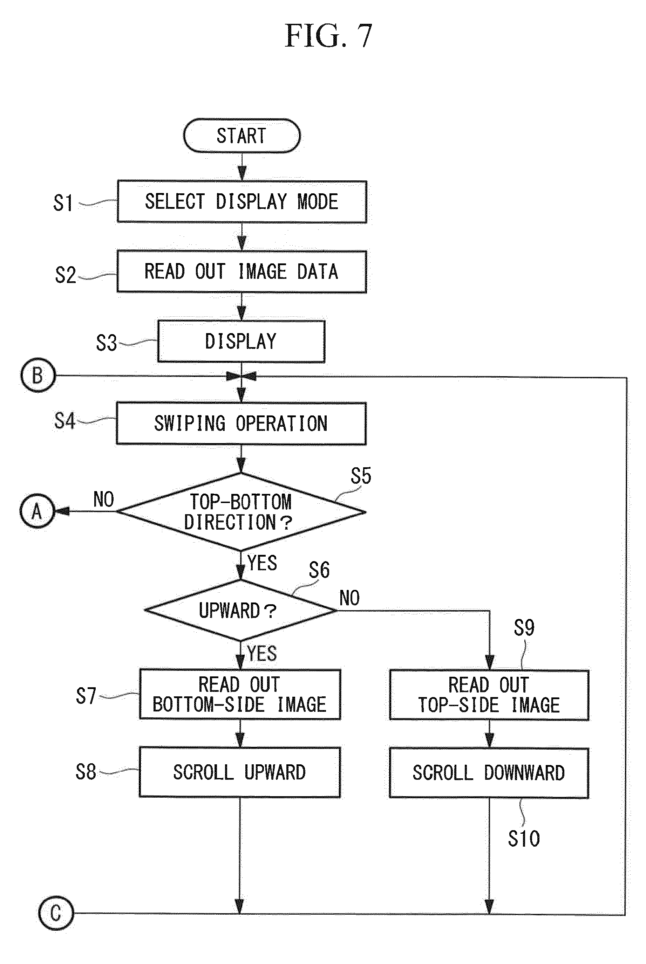

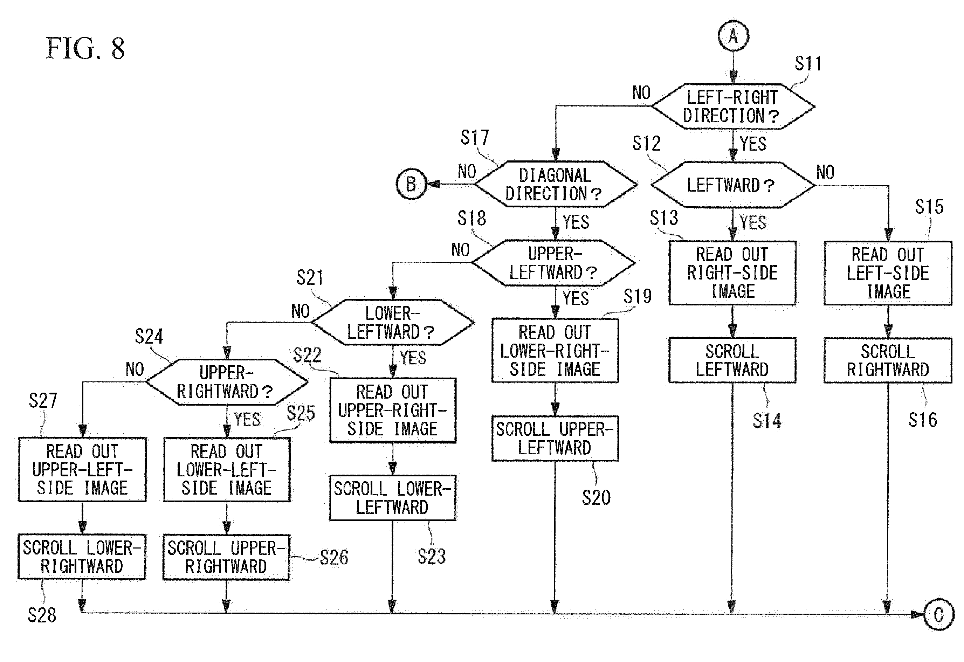

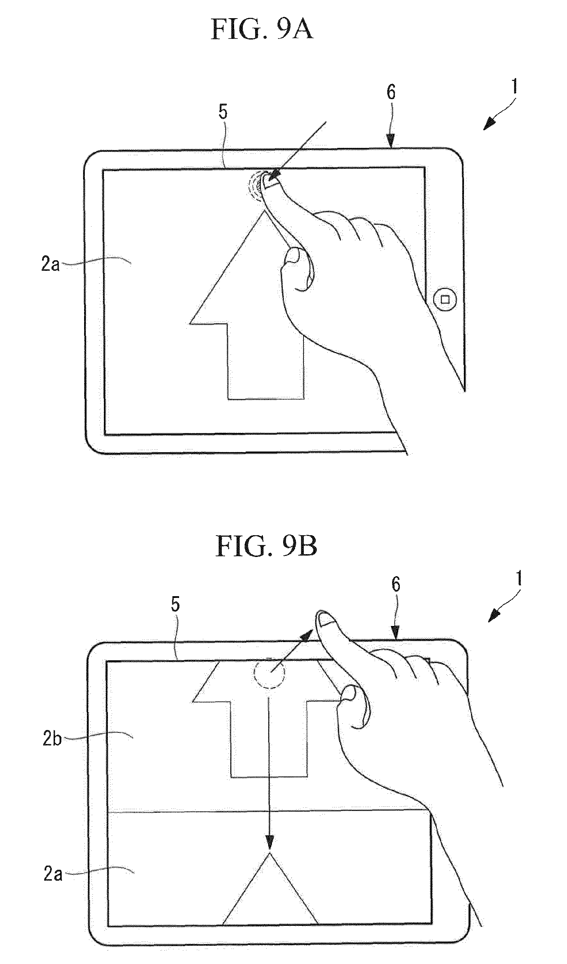

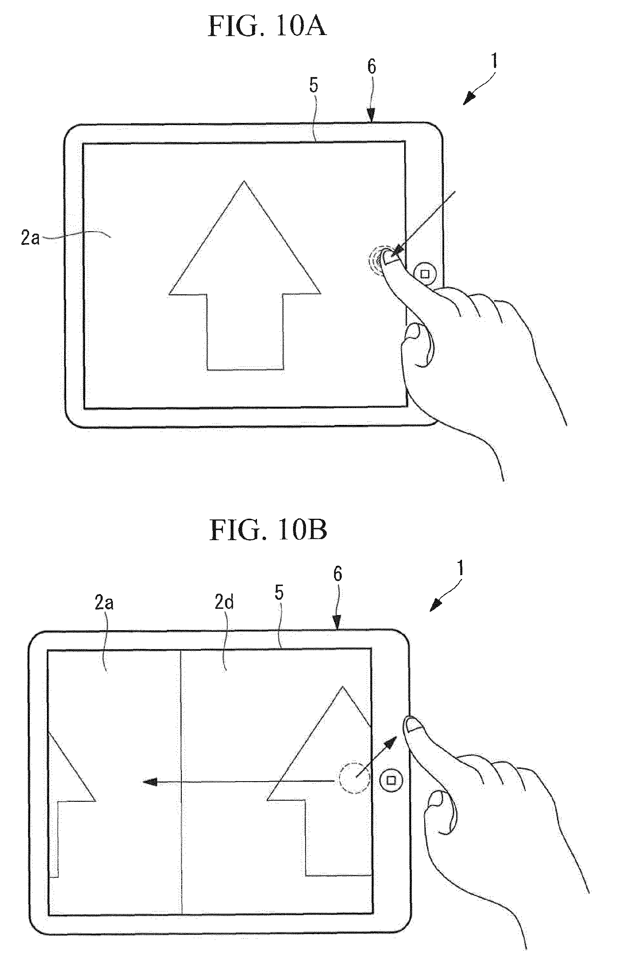

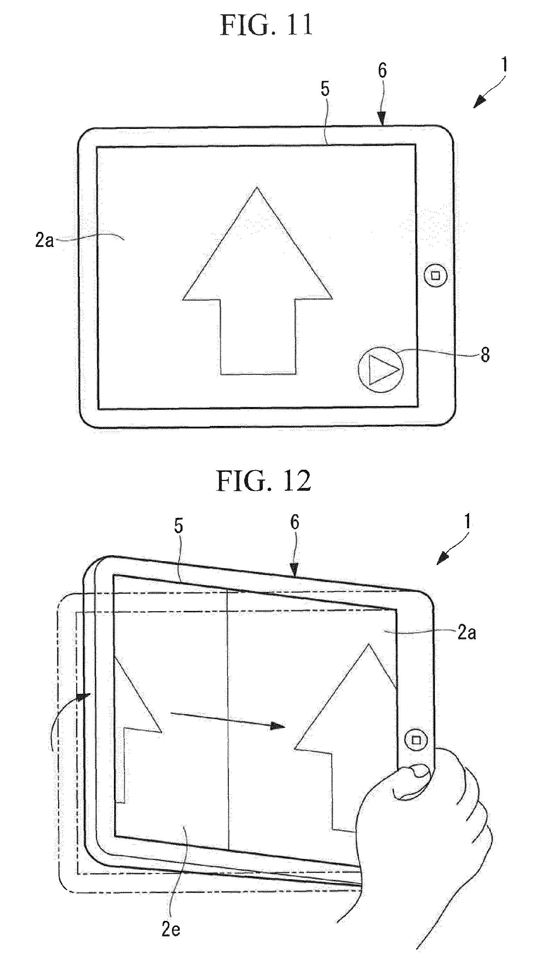

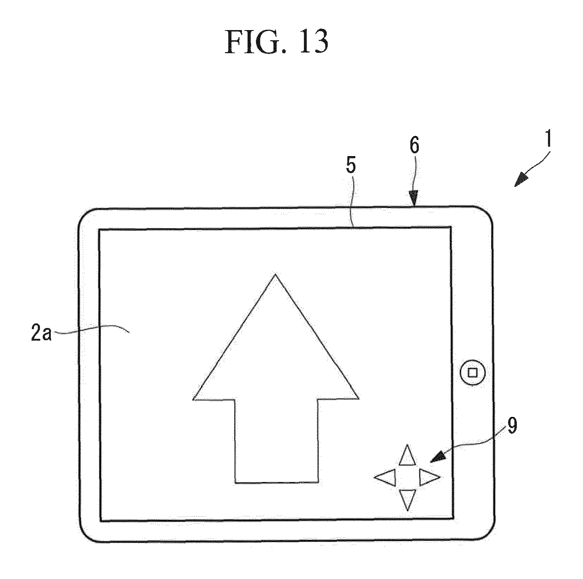

{Fig. 1} Fig. 1 is a block diagram showing a microscope-image display device according to an embodiment of the present invention.
{Fig. 2} Fig. 2 is a conceptual diagram showing a microscope image stored in a storage portion of the microscope-image display device in Fig. 1.
{Fig. 3A} Fig. 3A is a diagram showing a state in which an upper portion of a display of the microscope-image display device in Fig. 1 is touched.
{Fig. 3B} Fig. 3B is a diagram showing a downward swiping operation performed from the state shown in Fig. 3A.
{Fig. 4A} Fig. 4A is a diagram showing a state in which a lower portion of the display of the microscope-image display device in Fig. 1 is touched.
{Fig. 4B} Fig. 4B is an overall diagram showing an upward swiping operation performed from the state shown in Fig. 4A.
{Fig. 5A} Fig. 5A is a diagram showing a state in which a right portion of the display of the microscope-image display device shown in Fig. 1 is touched.
{Fig. 5B} Fig. 5B is a diagram showing a leftward swiping operation performed from the state shown in Fig. 5A.
{Fig. 6A} Fig. 6A is a diagram showing a state in which a left portion of the display of the microscope-image display device shown in Fig. 1 is touched.
{Fig. 6B} Fig. 6B is a diagram showing a rightward swiping operation performed from the state shown in Fig. 6A.
{Fig. 7} Fig. 7 is a flowchart showing a portion of a microscope-image display control method according to an embodiment of the present invention.
{Fig. 8} Fig. 8 is a flowchart showing another portion of the microscope-image display control method in Fig. 7.
{Fig. 9A} Fig. 9A is a diagram showing a state in which a top-end portion of the display of the microscope-image display device in Fig. 1 is tapped.
{Fig. 9B} Fig. 9B is a diagram showing switching of microscope images performed from the state shown in Fig. 9A by tapping the top end of the display.
{Fig. 10A} Fig. 10A is a diagram showing a state in which a right-end portion of the display of the microscope-image display device in Fig. 1 is tapped.
{Fig. 10B} Fig. 10B is a diagram showing switching of microscope images performed from the state shown in Fig. 10A by tapping the right end of the display.
{Fig. 11} Fig. 11 is a diagram showing a first modification of the microscope-image display device shown in Fig. 1.
{Fig. 12} Fig. 12 is a diagram showing a second modification of the microscope-image display device shown in Fig. 1.
{Fig. 13} Fig. 13 is a diagram showing a third modification of the microscope-image display device shown in Fig. 1.

### {Description of Embodiment}

A microscope-image display device according to an embodiment of the present invention will be described below with reference to the drawings.

As shown in Fig. 1, a microscope-image display device 1 according to this embodiment is provided with a storage portion 3 that stores a plurality of microscope images 2, a display 6 provided with touchscreen sensors (top-bottom instructing means and left-right instructing means) 4 and a liquid crystal screen (display screen) 5, and a control portion 7 that controls the liquid crystal screen 5 based on inputs to the touchscreen sensor 4.

The microscope images 2 are fluorescence images that are acquired, for example, as with the case in which a confocal scanning microscope or a multiphoton excitation microscope is used, by setting a focal position of an objective optical system at a position at a predetermined depth inside a specimen and by scanning laser light in two-dimensional directions (X-Y directions) that are perpendicular to the optical axis, as shown in Fig. 2. A plurality of the microscope images 2 are acquired by setting the focal position of the objective optical system at a plurality of different positions in the optical-axis direction (Z-direction).

The plurality of images acquired in the Z-direction at the same time or substantially the same time, as described above, are treated as one set, and multiple sets of the microscope images 2 that are acquired at different times are stored in the storage portion 3. In other words, the plurality of microscope images 2 are stored in the storage portion 3 in association with the Z-direction positions and time.

Although any system can be employed for the touchscreen sensors 4, sensors based on, for example, the projected capacitive touch system are employed. The touchscreen sensors 4 constitute a GUI, with which instructions are input in accordance with images displayed on the liquid crystal screen 5 disposed on the back side of the touchscreen sensors 4 and allow a so-called swiping operation, in which a finger is slid on a surface in the state in which the finger is in contact with the surface.

When a mode for displaying the microscope images 2 is selected by means of the GUI (graphical user interface), the control portion 7 causes one of the microscope images 2 having a predetermined Z-direction position and time to be read out from the storage portion 3 and displayed on the liquid crystal screen 5.

In addition, when the operator performs the following operations, the control portion 7 controls the display on the liquid crystal screen 5 in association with the respective operations.

Specifically, when the operator performs a swiping operation in a top-bottom direction on the liquid crystal screen 5 in the state in which one of the microscope images 2 is displayed on the liquid crystal screen 5, of the microscope images 2 acquired at the same time or substantially the same time, the control portion 7 causes another microscope image 2b or 2c, which is acquired at a Z-direction position adjacent to the position at which the displayed microscope image 2 was acquired, to be read out from the storage portion 3 and displayed on the liquid crystal screen 5.

Even more specifically, as shown in Fig. 3A, when the operator performs a swiping operation from top to bottom on the liquid crystal screen 5, the control portion 7 causes the displayed microscope image (hereinafter referred to as a display image) 2a to scroll downward, as shown in Fig. 3B, thereby removing the image from the bottom side of the liquid crystal screen 5, and the control portion 7 also places another microscope image 2b, which was acquired at a Z-direction position that is adjacent to and shallower than the position at which the display image 2a was acquired, adjacent to the display image 2a on the top side thereof so that the microscope image 2b is scrolled downward from the top side of the liquid crystal screen 5 to be displayed thereon.

Conversely, as shown in Fig. 4A, when the operator performs a swiping operation from bottom to top on the liquid crystal screen 5, the control portion 7 causes the display image 2a to scroll upward, as shown in Fig. 4B, thereby removing the image from the top side of the liquid crystal screen 5, and the control portion 7 also places another microscope image 2c, which was acquired at a Z-direction position that is adjacent to and deeper than the position at which the display image 2a was acquired, adjacent to the display image 2a on the bottom side thereof so that the microscope image 2c is scrolled upward from the bottom side of the liquid crystal screen 5 to be displayed thereon.

In addition, when the operator performs a swiping operation in a left-right direction on the liquid crystal screen 5 in the state in which one of the microscope images 2 is displayed on the liquid crystal screen 5, of the microscope images 2 acquired at the same Z-direction position, the control portion 7 causes another microscope image 2d or 2e, which was acquired at a time adjacent to the time at which the displayed microscope image 2a was acquired, to be read out from the storage portion 3 and displayed on the liquid crystal screen 5.

Even more specifically, as shown in Fig. 5A, when the operator performs a swiping operation from right to left on the liquid crystal screen 5, the control portion 7 causes the display image 2a to scroll leftward, as shown in Fig. 5B, thereby removing the image from the left side of the liquid crystal screen 5, and the control portion 7 also places another microscope image 2d, which was acquired at a time adjacent to and later than the time at which the display image 2a was acquired, adjacent to the display image 2a on the right side so that the microscope image 2d is scrolled leftward from the right side of the liquid crystal screen 5 to be displayed thereon.

Conversely, as shown in Fig. 6A, when the operator performs a swiping operation from left to right on the liquid crystal screen 5, the control portion 7 causes the display image 2a to scroll rightward, as shown in Fig. 6B, thereby removing the image from the right side of the liquid crystal screen 5, and the control portion 7 also places another microscope image 2e, which was acquired at a time that is adjacent to and earlier than the time at which the display image 2a was acquired, adjacent to the display image 2a on the left side so that the microscope image 2e is scrolled rightward from the left side of the liquid crystal screen 5 to be displayed thereon.

A microscope-image display control method in which the thus-configured microscope-image display device 1 according to this embodiment is employed will be described below.

As shown in Figs. 7 and 8, with the microscope-image display control method according to this embodiment, first, the operator selects the mode for displaying the microscope images 2 via a GUI, which is not illustrated (Step S1). In the case in which this mode is selected, the control portion 7 causes one of the microscope images 2 having a predetermined Z-direction position and time to be read out from the storage portion 3 (Step S2) and displayed on the liquid crystal screen 5 (Step S3).

Subsequently, when the operator performs a swiping operation on the liquid crystal screen 5 (Step S4), the control portion 7 judges whether or not the swiping operation is a swiping operation in a top-bottom direction (Step S5). If the swiping operation is a swiping operation in a top-bottom direction, the control portion 7 further judges whether or not the swiping operation is an upward swiping operation (Step S6), and if the swiping operation is an upward swiping operation, a bottom-side image (a microscope image 2c that is adjacent to the display image 2a in the deeper direction in the Z-direction) is read out (Step S7), and the read-out bottom-side image 2c, which is placed adjacent to the display image 2a on the bottom side thereof, is brought onto the liquid crystal screen 5 while scrolling the display image 2a upward (Step S8).

On the other hand, when the control portion 7 judges whether or not the swiping operation is an upward swiping operation in Step S6, if the swiping operation is not an upward swiping operation, a top-side image (a microscope image 2b that is adjacent to the display image 2a in a shallower direction in the Z-direction) is read out (Step S9), and the read-out top-side image 2b, which is placed adjacent to the display image 2a on the top side thereof, is brought onto the liquid crystal screen 5 while scrolling the display image 2a downward (Step S10).

In the case in which it is judged that the swiping operation is not a swiping operation in a top-bottom direction in Step S5, it is then judged whether or not the swiping operation is a swiping operation in a left-right direction (Step S11), as shown in Fig. 8. If the swiping operation is a swiping operation in a left-right direction, the control portion 7 further judges whether or not the swiping operation is a leftward swiping operation (Step S12), and if the swiping operation is a leftward swiping operation, a right-side image (a microscope image 2d that is adjacent to the display image 2a rearward in the time-axis direction) is read out (Step S13), and the read-out right-side image 2d, which is placed adjacent to the display image 2a on the right side thereof, is brought onto the liquid crystal screen 5 while scrolling the display image 2a leftward (Step S14).

On the other hand, when the control portion 7 judges whether or not the swiping operation is a leftward swiping operation in Step S12, if the swiping operation is not a leftward swiping operation, a left-side image (a microscope image 2e that is adjacent to the display image 2a forward in the time-axis direction) is read out (Step S15), and the read-out left-side image 2e, which is placed adjacent to the display image 2a on the left side thereof, is brought onto the liquid crystal screen 5 while scrolling the display image 2a rightward (Step S16).

In the case in which it is judged that the swiping operation is not a swiping operation in a left-right direction in Step S11, it is then judged whether or not the swiping operation is a swiping operation in a diagonal direction (Step S17). If the swiping operation is a swiping operation in a diagonal direction, the control portion 7 further judges whether or not the swiping operation is an upper-leftward swiping operation (Step S18), and if the swiping operation is an upper-leftward swiping operation, lower-right-side images (a microscope image (not shown) that is adjacent to the display image 2a in a deeper direction in the Z-direction and rearward in the time-axis direction, the right-side image 2d, and the bottom-side image 2c) are read out (Step S19), and the read-out lower-right-side images, which are placed adjacent to the display image 2a on the lower-right side, right side, and the bottom side thereof, are brought onto the liquid crystal screen 5 while scrolling the display image 2a upper-leftward (Step S20).

On the other hand, when the control portion 7 judges whether or not the swiping operation is an upper-leftward swiping operation in Step S18, if the swiping operation is not an upper-leftward swiping operation, it is then judged whether or not the swiping operation is a lower-leftward swiping operation (Step S21), and if the swiping operation is a lower-leftward swiping operation, upper-right-side images (a microscope image (not shown) that is adjacent to the display image 2a in a shallower direction in the Z-direction and rearward in the time-axis direction, the right-side image 2d, and the top-side image 2b) are read out (Step S22) and the read-out upper-right-side images, which are placed adjacent to the display image 2a on the upper-right side, right side, and top side thereof, are brought onto the liquid crystal screen 5 while scrolling the display image 2a lower-leftward (Step S23).

In the case in which it is judged that the swiping operation is not a lower-leftward swiping operation in Step S21, it is then judged whether or not the swiping operation is an upper-rightward swiping operation (Step S24). If the swiping operation is an upper-rightward swiping operation, by means of the control portion 7, lower-left-side images (a microscope image (not shown) that is adjacent to the display image 2a in a deeper direction in the Z-direction and forward in the time-axis direction, the left-side image 2e, and the bottom-side image 2c) are read out (Step S25), and the read-out lower-left-side images, which are placed adjacent to the display image 2a on the lower-left side, left side, and bottom side thereof, are brought onto the liquid crystal screen 5 while scrolling the display image 2a upper-rightward (Step S26).

On the other hand, when the control portion 7 judges whether or not the swiping operation is an upper-rightward swiping operation in Step S24, if the swiping operation is not an upper-rightward swiping operation, upper-left-side images (a microscope image (not shown) that is adjacent to the display image 2a in a shallower direction in the Z-direction and forward in the time-axis direction, the left-side image 2e, and the top-side image 2b) are read out (Step S27), and the read-out upper-left-side images, which are placed adjacent to the display image 2a on the upper-left side, left side, and top side thereof, are brought onto the liquid crystal screen 5 while scrolling the display image 2a lower-rightward (Step

S28). When the microscope images 2b to 2e are to be displayed due to scrolling in the respective directions, the steps from Step S4 are repeated. Note that, in the case in which it is judged whether or not the swiping operation is a diagonal swiping operation in Step S17, if the swiping operation is not a diagonal swiping operation, the process returns to Step S4.

With the thus-configured microscope-image display device 1 and microscope-image display control method according to this embodiment, the operator viewing the display image 2a displayed on the liquid crystal screen 5 can perform observation by switching the display image 2a to other microscope images 2b to 2e just by performing a swiping operation on the liquid crystal screen 5.

In this case, in this embodiment, because a swiping operation in a top-bottom direction on the liquid crystal screen 5 is associated with changing of the Z-direction position of the microscope image 2 to be displayed, the operator can intuitively change the Z-direction position of the microscope image 2 to be displayed.

Specifically, it is generally easy to accept an association between downside and the deeper direction and that between upside and the shallower direction. Therefore, a swiping operation from bottom to top on the liquid crystal screen 5 (operation to switch the display image 2a to the microscope image 2c on the bottom side thereof) means a change to a deeper position in the specimen, a swiping operation from top to bottom (operation to switch the display image 2a to the microscope image 2b on the top side thereof) means a change to a shallower direction in the specimen, and it is easy to make these associations intuitively.

Therefore, with this embodiment, when the operator wants to change the Z-direction position in the specimen to be observed, he/she can quickly find a microscope image 2 acquired at the Z-direction position at which observation is desired by intuitively performing a swiping operation in the top-bottom direction, and thus, the observation time can be reduced.

Furthermore, with the microscope-image display control method according to this embodiment, because the microscope image 2 on the liquid crystal screen 5 is switched by scrolling the microscope image 2 instead of instantaneously switching the image, it is also possible to visually check the direction in which the microscope image 2 to be switched to is adjacent to the display image 2a. Accordingly, there is an advantage in that it is possible to prevent the operator from switching in the wrong direction, which makes it possible to even more easily find a microscope image 2 at a depthwise position at which observation is desired.

In addition, with this embodiment, because a swiping operation in a left-right direction on the liquid crystal screen 5 is associated with changing of the acquisition time of a microscope image 2 to be displayed, the operator can intuitively change the acquisition time of the microscope image 2 to be displayed.

Specifically, it is generally easy to accept an association between right side and the later time and that between left side and the earlier time. Therefore, a swiping operation from right to left on the liquid crystal screen 5 (operation to switch the display image 2a to the microscope image 2d on the right side thereof) means a change to a microscope image 2 acquired at a later time than the time at which the display image 2a was acquired, a swiping operation from left to right (operation to switch the display image 2a to the microscope image 2e on the left side thereof) means a change to a microscope image 2 acquired at an earlier time than the time at which the display image 2a was acquired, and it is easy to make these associations intuitively.

Therefore, with this embodiment, when the operator wants to change the acquisition time of the microscope image 2 to be observed, he/she can quickly find a microscope image 2 acquired at the time at which observation is desired by intuitively performing a swiping operation in the left-right direction, and thus, the observation time can be reduced.

Furthermore, with the microscope-image display control method according to this embodiment, because the microscope image 2 on the liquid crystal screen 5 is switched by scrolling the microscope image 2 instead of instantaneously switching the image, it is also possible to visually check the direction in which the microscope image 2 to be switched to is adjacent to the display image 2a. Accordingly, there is an advantage in that it is possible to prevent the operator from switching in the wrong direction, which makes it possible to even more easily find a microscope image 2 at a time-axis-direction position at which observation is desired.

In addition, with the microscope-image display control method according to this embodiment, because the microscope image 2 to be displayed is switched by performing a swiping operation in the top-bottom direction and the left-right direction, it is possible to change both the Z-direction position and the acquisition time of the microscope image 2 to be displayed by performing a swiping operation in a top-bottom direction and a left-right direction at the same time. Accordingly, there is an advantage in that it is possible to even more quickly find a microscope image 2 desired for observation.

Note that, in this embodiment, an instruction from bottom to top on the liquid crystal screen 5 causes a change to a deeper position in a specimen and an instruction from top to bottom causes a change in a shallower direction in the specimen; however, conversely, the instruction from bottom to top on the liquid crystal screen 5 may cause a change to a shallower position in the specimen, and the instruction from top to bottom may cause a change in a deeper direction in the specimen.

In this case, it is permissible to allow an operator to select whether the instruction from bottom to top on the liquid crystal screen 5 causes a change to a deeper position in the specimen or causes a change to a shallower position in the specimen.

In addition, the microscope images may be switched one by one when the instructions on the liquid crystal screen 5 are given at low speed, and the microscope images may be made to flow continuously when the instructions on the liquid crystal screen 5 are given multiple times at high speed.

In this embodiment, although instructions on the liquid crystal screen 5 in the left-right direction are used to switch among microscope images that are acquired next to each other in the time-series direction, it is not limited thereto.

For example, the instructions on the liquid crystal screen 5 in the left-right direction may be associated with changes in X-direction positions of microscope images, changes in Y-direction positions of microscope images, switching of microscope images acquired at different wavelengths (for example, three RGB channels), or the like, and the instructions in the left-right direction may be used to place a microscope image displayed on the display screen to different display states.

In addition, in this embodiment, although a swiping operation employing the touchscreen sensors 4 has been described as an example of the top-bottom instructing means and left-right instructing means, it is not limited thereto, and, by tapping one of the ends of the liquid crystal screen 5, the microscope image 2 may be switched to another image adjacent thereto at the tapped position. For example, as shown in Fig. 9A, when a top-side end is tapped, the display image 2a may be switched to another microscope image 2b acquired at a Z-direction position that is adjacent to the display image 2a in the shallower direction, as shown in Fig. 9B. In addition, as shown in Fig. 10A, when a right-side end is tapped, the display image 2a may be switched to another microscope image 2d acquired at a later time that is adjacent to the display image 2a, as shown in Fig. 10B.

In addition, the display image 2a may be switched by tapping a predetermined portion of the liquid crystal screen 5 instead of tapping an end of the liquid crystal screen 5.

In addition, in this case, by using a long tap or a double tap, the microscope images 2 on the tapped-position side may be displayed by being continuously switched in a sequence, like a slide show. In addition, as shown in Fig. 11, a playback button 8 may be displayed on the liquid crystal screen 5 by means of the GUI, and, by operating this playback button 8, the microscope images 2 arranged in the time-series direction may be played back as a slide show in a forward direction or a reverse direction, and the microscope images 2 arranged in the Z-axis direction may be played back as a slide show in the direction in which the depth is increased or the direction in which the depth is decreased. In addition, instead of using the playback button 8, the slide show may be played back by tilting the microscope-image display device 1 itself, as shown in Fig. 12, and the playback direction may be changed in accordance with the tilting direction. In addition, the playback speed may be changed in accordance with the tilting angle.

In addition, as shown in Fig. 13, operation buttons 9 for the top-bottom direction and left-right direction may be displayed on the liquid crystal screen 5 by means of the GUI, and the microscope images 2 may be switched by operating these operation buttons 9.

In addition, in this embodiment, although the tablet-computer-like microscope-image display device 1 provided with the touchscreen sensors 4 has been described as an example, it is not limited thereto, and the present invention may be realized by using a laptop personal computer (PC) having a touchpad or a desktop PC.

In the case in which the top-bottom instructing means and left-right instructing means are realized by using a touchpad, the operation thereof will be the same as the swiping operation of the touchscreen sensors 4, allowing the microscope image 2 to be displayed on the liquid crystal screen 5 to be switched. In addition, in the case of a desktop PC, the top-bottom instructing means and the left-right instructing means should be realized by using left and right buttons and a wheel button on a mouse or arrow keys on a keyboard.

In addition, in this embodiment, although a special microscope-image display device 1 has been described, the present invention may be realized by means of a program that is executed by a computer such as a general-purpose tablet computer, a PC, or the like.

Specifically, a microscope-image display control program that causes a computer to execute Step S1 to Step S28 may be recorded in a computer-readable recording medium. The recording medium is, for example, an auxiliary storage device such as a magnetic disk, a magneto-optical disk, a CD-ROM, a DVD-ROM, a semiconductor memory, or the like. A computer is provided with a CPU (Central Processing Unit) and a main storage device such as a RAM (Random Access Memory), and so forth, and the CPU reads out the program from the recording medium into the main storage device and executes it to realize the above-described processing.

### {Reference Signs List}

- 1: microscope-image display device
- 2a, 2b, 2c, 2d, 2e: microscope image
- 4: touchscreen sensor (top-bottom instructing means, left-right instructing means)
- 5: liquid crystal screen (display screen)
- 6: display
- 7: control portion
- S3: displaying step
- S4: swiping operation (top-bottom instructing step)
- S8: scroll upward (Z-direction image switching step)
- S10: scroll downward (Z-direction image switching step)

## Claims

1. A microscope-image display control method comprising:
a displaying step of displaying, of a plurality of microscope images acquired by moving a focal position of an objective optical system of a microscope in an optical-axis direction, one of the microscope images on a display screen;
a top-bottom instructing step of giving an instruction for one of top and bottom directions on the display screen; and
a Z-direction image switching step of switching the microscope image displayed on the display screen to another microscope image acquired at a focal position of the objective optical system, which is adjacent to the displayed microscope image in the optical-axis direction, based on the direction instructed in the top-bottom instructing step.

2. The microscope-image display control method according to Claim 1, wherein, in the Z-direction image switching step, the displayed microscope image is switched to another microscope image to be displayed next by scrolling the image on the screen in a top-bottom direction.

3. The microscope-image display control method according to Claim 1 or 2, further comprising:
a left-right instructing step of giving an instruction for one of left and right directions on the display screen; and
a display-image switching step of changing the state of the microscope image displayed on the display screen to a different display state based on the direction instructed in the left-right instructing step.

4. The microscope-image display control method according to Claim 1 or 2, wherein a plurality of microscope images are acquired in a time series at individual focal positions in the optical-axis direction, the microscope-image display control method further comprising:
a left-right instructing step of giving an instruction for one of left and right directions on the display screen; and
a time-axis-direction image switching step of switching the microscope image displayed on the display screen to another microscope image acquired at a time that is adjacent to that of the displayed microscope image in a time-series direction, based on the direction instructed in the left-right instructing step.

5. The microscope-image display control method according to Claim 4, wherein, in the time-axis-direction image switching step, the displayed microscope image is switched to another microscope image to be displayed next by scrolling the image on the screen in a left-right direction.

6. A microscope-image display control program that causes a computer to execute:
a displaying step of displaying, of a plurality of microscope images acquired by moving a focal position of an objective optical system of a microscope in an optical-axis direction, one of the microscope images on a display screen;
a top-bottom instructing step of giving an instruction for one of top and bottom directions on the display screen; and
a Z-direction image switching step of switching the microscope image displayed on the display screen to another microscope image acquired at a focal position of the objective optical system, which is adjacent to the displayed microscope image in the optical-axis direction, based on the direction instructed in the top-bottom instructing step.

7. A microscope-image display device comprising:
a display screen that displays a microscope image;
a top-bottom instructing means for giving an instruction for one of top and bottom directions on the display screen; and
a control portion that causes, of a plurality of microscope images acquired by moving a focal position of an objective optical system of a microscope in an optical-axis direction, one of the microscope images to be displayed on the display screen and that controls the display on the display screen so that a microscope image displayed on the display screen is switched to another microscope image acquired at a focal position of the objective optical system, which is adjacent to the displayed microscope image in the optical-axis direction, when an instruction for one of the top and bottom directions is given by the top-bottom instructing means.

8. The microscope-image display device according to Claim 7, wherein the control portion controls the display on the display screen so that the displayed microscope image is switched to another microscope image to be displayed next by scrolling the image on the screen in a top-bottom direction in accordance with the instruction given by the top-bottom instructing means.

9. The microscope-image display device according to Claim 7 or 8, further comprising:
a left-right instructing means for giving an instruction for one of left and right directions on the display screen,
wherein the control portion controls the display on the display screen so that a state of the microscope image displayed on the display screen is changed to a different display state when the instruction for one of the left and right directions is given by the left-right instructing means.

10. The microscope-image display device according to Claim 7 or 8, further comprising:
a left-right instructing means for giving an instruction for one of left and right directions on the display screen,
wherein the control portion controls the display on the display screen so that the microscope image displayed on the display screen is switched to another microscope image acquired at a time that is adjacent to the displayed microscope image in a time-series direction when the instruction for one of the left and right directions is given by the left-right instructing means.

11. The microscope-image display device according to Claim 10, wherein the control portion controls the display on the display screen so that the displayed microscope image is switched to another microscope image to be displayed next by scrolling the image on the screen in the left-right direction in accordance with the instruction given by the left-right instructing means.

12. The microscope-image display device according to Claim 9 or 10, wherein the control portion controls the display on the display screen so that the displayed microscope image is switched to another microscope image to be displayed next by scrolling on the screen in the top-bottom direction and the left-right direction at the same time when the instructions are given by the top-bottom instructing means and the left-right instructing means at the same time.
